# EUROPÄISCHE PATENTSCHRIFT

(11) **EP 2 279 919 B1**
(45) Veröffentlichungstag und Bekanntmachung des Hinweises auf die Patenterteilung: **01.04.2015**
(21) Anmeldenummer: 10169317.4
(22) Anmeldetag: 12.07.2010
(51) Int. Cl.: B60R 25/10, G07F 17/24, G08G 1/14, G07B 15/02

(54) **Vorrichtung und Verfahren zur Diebstahlsicherung und/oder Überwachung eines geparkten Fahrzeugs**
Device and method for preventing a parked car from being stolen and monitoring a parked car
Dispositif et procédé de protection contre le cambriolage et/ou de surveillance d'un véhicule garé

(30) Priorität: 29.07.2009 DE 102009035200
(43) Veröffentlichungstag der Anmeldung: 02.02.2011
(73) Patentinhaber: E.B.M.-Elektro-Bau-Montage GmbH & Co. KG, 49084 Osnabrück (DE)
(72) Erfinder: Zachmann, Reinhard, 93093, Donaustauf (DE)
(74) Vertreter: Bossmeyer, Jörg Peter

(56) Entgegenhaltungen:
- EP-A1- 0 839 699
- EP-A2- 1 361 555
- DE-A1- 3 734 486
- DE-A1-102005 034 988
- DE-A1-102006 016 050
- DE-U1-202006 015 787

## Beschreibung

Die vorliegende Erfindung betrifft ein Verfahren sowie eine Vorrichtung zur Diebstahlsicherung und/oder Überwachung eines geparkten Fahrzeugs, bei dem bzw. bei der ein durch das Fahrzeug beparkter Stellplatz mittels zumindest eines Sensors überwacht wird, das Sensorsignal mittels einer Auswerteeinheit auf eine Veränderung hin ausgewertet wird und bei Vorliegen einer vorbestimmten Signaländerung ein Warnsignal abgegeben wird.

Herkömmliche Diebstahlsicherungen bzw. Fahrzeugüberwachungsanlagen erfassen regelmäßig am Fahrzeug selbst charakteristische Änderungen von Fahrzeugparametern, wobei entsprechende Alarmanlagen am Fahrzeug selbst installiert sind. Beispielsweise werden im Inneren der Fahrgastzelle Bewegungsmelder angebracht und/oder die Scheiben mittels angekoppelter Sensoren auf Glasbruch hin überwacht und/oder Erschütterungen des Fahrzeugs durch entsprechende Vibrations- bzw. Beschleunigungssensoren erfasst. Derartige im Fahrzeug installierte Alarmanlagen sind jedoch regelmäßig teuren Fahrzeugen der Oberklasse vorbehalten und nachträglich an älteren Fahrzeugen nur sehr aufwendig nachzurüsten.

Andererseits wurde bereits vorgeschlagen, beispielsweise in Garagen den beparkten Stellplatz und die unmittelbare Umgebung des Fahrzeugs zu überwachen, um hierdurch eine Sicherung gegenüber Fahrzeugdiebstählen und Fahrzeugaufbrüchen zu schaffen. Hierbei können beispielsweise optische Sensoren oder in anderer Weise arbeitende Bewegungsmelder den mit einem Fahrzeug beparkten Stellplatz überwachen. Werden optische Sensoren, akustische Sensoren wie beispielsweise Ultraschallsensoren oder Infrarotmelder verwendet, können Fahrzeugbewegungen selbst, aber auch die Annäherung von Personen an das Fahrzeug erfasst werden, so dass ein entsprechendes Warnsignal abgegeben werden kann.

Das Dokument EP 0 839 699 offenbart ein Verfahren zur Diebstahlsicherung eines geparkten Fahrzeugs, bei dem der durch das Fahrzeug beparkte Stellplatz mittels eines Ultraschallsensors überwacht wird, wobei das Sensorsignal mittels einer Auswerteeinheit auf eine Veränderung hin ausgewertet wird und bei Vorliegen einer vorbestimmten Signaländerung ein Warnsignal abgegeben wird.

Aus dem Dokument EP 1 361 555 ist die Benutzung von Magnetenfeldsensoren, um einen "genetischen Fingerabdruck" eines Fahrzeuges zu gewinnen, bekannt. EP 1 361 555 richtet sich auf die Identifizierung von Fahrzeugarten bei der Ein- und Ausfahrt eines Parkplatzes, und nicht auf die Überwachung von individuellen Fahrzeuge in einem Stellplatz. Bei Dokument EP 1 361 55 stellt sich die Aufgabe, eine verbesserte Nutzung der zur Verfügung stehenden Parkfläche zu erreichen.

Solche externen Diebstahlsicherungen bzw. Parküberwachungsvorrichtungen sind jedoch für Stellplätze im Freien oder auch für öffentliche Tiefgaragen, an denen mehrere Stellplätze von verschiedenen Personen genutzt werden, kaum wirksam einsetzbar, da es zu oft zu Fehlalarmen kommt. Auch wenn durch beispielsweise die Herabsetzung der Ansprechschwelle ein Fehlalarm bei Annäherung durch kleine Tiere wie beispielsweise Mäuse und Katzen vermieden werden kann, ist kaum verlässlich zu unterscheiden, ob ein zwischen zwei geparkte Fahrzeuge tretender Mensch das rechte Fahrzeug aufbrechen oder das linke Fahrzeug regulär besteigen will. Zum anderen ist bei entsprechend strikter Begrenzung der Erfassungsbereiche auf den beparkten Stellplatz eine vollständige Stellplatzüberwachung, die die Annäherung in Signalschatten einzelner Sensoren ausschließt, nur mit einer Vielzahl von Sensoren, die an verschiedenen Stellen positioniert sind, möglich, was die Überwachungsvorrichtung insgesamt aufwendig macht.

Hiervon ausgehend liegt der vorliegenden Erfindung die Aufgabe zu Grunde, ein verbessertes Verfahren sowie eine verbesserte Vorrichtung zur Diebstahlssicherung und/oder Überwachung von geparkten Fahrzeugen der eingangs genannten Art zu schaffen, die Nachteile des Standes der Technik vermeiden und letzteren in vorteilhafterweise weiterbilden. Vorzugsweise soll bei konstruktiv einfach aufgebauter und zu installierender Ausbildung der Vorrichtung eine hochwirksame und sichere Diebstahlsicherung und Überwachung geparkter Fahrzeuge geschaffen werden, die dennoch nicht zu Fehlalarmen neigt.

Erfindungsgemäß wird diese Aufgabe durch ein Verfahren nach Anspruch 1 sowie eine Vorrichtung nach Anspruch 9 gelöst. Bevorzugte Ausgestaltungen der Erfindung sind Gegenstand der abhängigen Ansprüche.

Es wird also vorgeschlagen, zur Überwachung eines geparkten Fahrzeugs dessen "magnetischen Fingerabdruck" bzw. dessen Einwirkung auf das Erdmagnetfeld zu bestimmen und Veränderungen des Erdmagnetfelds, die beispielsweise durch Öffnen der Motorhaube, Öffnen der Kofferraumklappe oder Entnahme von Fahrzeug- oder Ladungsteilen bewirkt werden, zur Auslösung eines Warnsignals heranzuziehen. Erfindungsgemäß wird nach Abstellen eines Fahrzeugs auf einem jeweiligen Stellplatz das Erdmagnetfeld über dem Stellplatz mittels zumindest eines Magnetfeldsensors erfasst und in Form von fahrzeugspezifischen Magnetfeld-Referenzdaten abgespeichert, wobei nach Abspeichern der fahrzeugspezifischen Magnetfeld-Referenzdaten kontinuierlich oder zyklisch das Erdmagnetfeld über dem Stellplatz erneut erfasst und mit den gespeicherten Magnetfeld-Referenzdaten verglichen wird, wobei bei Vorliegen einer vorbestimmten Abweichung der zyklisch oder kontinuierlich erfassten, aktuellen Magnetfelddaten von den abgespeicherten Magnetfeld-Referenzdaten das Warnsignal ausgegeben wird. Die Überwachung des Erdmagnetfelds über dem beparkten Stellplatz macht sich die Überlegung zu Nutze, dass das Erdmagnetfeld durch den Stellplatz betretende Personen oder sich dem Fahrzeug annähernde Tiere keine Änderung erfährt, sehr wohl jedoch durch Änderungen am Fahrzeug selbst verändert wird. Jedes geparkte Fahrzeug hinterlässt einen individuellen, fahrzeugspezifischen Fingerabdruck auf dem Erdmagnetfeld, das auch durch kleine Veränderungen am Fahrzeug wie beispielsweise das Öffnen der Motorhaube, das Öffnen des Kofferraumdeckels oder einer Tür, oder durch den Abbau eines Fahrzeugteils wie beispielsweise einer Radfelge eine feine Veränderung erfährt, durch deren Überwachung auf eine Manipulation am Fahrzeug rückgeschlossen und ein entsprechendes Warnsignal ausgegeben werden kann.

Um das Abstellen eines Fahrzeuges zu bestimmen und die Überwachungsvorrichtung entsprechend "scharf zu stellen", d.h. zu veranlassen, das aktuell erfasste Erdmagnetfeld des frisch beparkten Stellplatzes als fahrzeugspezifische Magnetfeld-Referenzdaten abzuspeichern und nachfolgend erfasste Erdmagnetfelddaten mit diesen Referenzdaten zu vergleichen, kann grundsätzlich in verschiedener Art und Weise vorgegangen werden. In Weiterbildung der Erfindung kann das Abstellen des Fahrzeugs in Abhängigkeit des Signals eines dem jeweiligen Stellplatz zugeordneten Parkticketautomaten festgestellt werden. Dem den Stellplatz zugeordneten Parkticketautomaten kann hierzu eine Erfassungseinrichtung zugeordnet sein, die das Lösen eines Parktickets erfasst, in Abhängigkeit dessen die aktuell erfassten Erdmagnetfelddaten über dem Stellplatz, für den das Parkticket gelöst wurde, als Referenzdaten abgespeichert werden, mit denen dann die nachfolgend kontinuierlich oder zyklisch erfassten Erdmagnetfelddaten verglichen werden.

Alternativ oder zusätzlich kann das Abstellen eines Fahrzeugs auf dem Stellplatz auch mittels eines Abtastsensors bestimmt werden, der den Stellplatzboden und/oder den Raum über dem Stellplatz abtastet, so dass in Abhängigkeit eines entsprechenden Abtastsensorsignals die Magnetfelddatenerfassung scharf gestellt werden kann. Der genannte Abtastsensor kann hierbei grundsätzlich verschieden ausgebildet sein, wobei vorteilhafterweise eine vom Magnetfeld abweichende Zustandsgröße des Stellplatzes oder des Raums darüber erfasst wird. Beispielsweise kann der Abtastsensor - insbesondere bei Überwachung eines Parkdecks - ein Bodendruck- oder -lastsensor sein. In vorteilhafter Weiterbildung der Erfindung kann auch ein optischer Abtastsensor, ein akustischer Abtastsensor beispielsweise in Form eines Ultraschallsensors, ein Infrarotsensor, ein Radarsensor oder ein ähnlicher, berührungslos arbeitender Abtastsensor vorgesehen sein, der die Bodenoberfläche des Stellplatzes und/oder den Raum darüber abtastet, um das Abstellen eines Fahrzeugs zu erfassen. Der genannte Abtastsensor kann auch als Abstandssensor ausgebildet sein, der am jeweiligen Stellplatz montiert ist und den Abstand eines Fahrzeugs von seiner Montageposition erfasst. Um der zuvor geschilderten Problematik der Erfassung von sich nähernden Tieren oder Personen zu vermeiden, wird in Abhängigkeit dieses zusätzliche Abtastsensors lediglich die Magnetfelderfassung scharf gestellt, wobei nach erfolgter Scharfstellung das Signal des Abtastsensors deaktiviert oder unberücksichtigt gelassen werden kann. Das Warnsignal wird vorteilhafter Weise nicht in Abhängigkeit dieses Abtastsensors ausgegeben.

Alternativ oder zusätzlich kann das Abstellen des Fahrzeugs auf dem Stellplatz auch anhand des Signals des zumindest einen Magnetfeldsensors bestimmt werden, wobei vorteilhafter Weise zunächst das Erdmagnetfeld über dem Stellplatz ohne ein darauf abgestelltes Fahrzeug erfasst und in Form von Magnetfeld-Referenzdaten abgespeichert wird, die den ursprünglichen Zustand des Erdmagnetfelds über dem Stellplatz wiedergeben. Diese "ursprünglichen" Magnetfeld-Referenzdaten geben hierbei das Erdmagnetfeld über dem Stellplatz wieder, wenn darauf kein Fahrzeug abgestellt ist. Nach Abspeicherung dieser ursprünglichen Magnetfeld-Referenzdaten wird das Erdmagnetfeld sodann über dem Stellplatz laufend oder zyklisch erfasst und mit den genannten ursprünglichen Magnetfeld-Referenzdaten verglichen. Stellt die Auswerteeinheit eine vorbestimmte Änderung der aktuellen Erdmagnetfelddaten gegenüber den abgespeicherten, ursprünglichen Magnetfeld-Referenzdaten fest, wird angenommen, dass ein Fahrzeug auf dem Stellplatz abgestellt ist.

Hierbei kann in vorteilhafter Weiterbildung der Erfindung die Auswerteeinheit bestimmen, ob die festgestellten Änderungen der aktuellen Erdmagnetfelddaten gegenüber den abgespeicherten, ursprünglichen Referenzdaten in eine vorbestimmte Klasse oder Gruppe von Änderungen fallen bzw. vorbestimmte Merkmale zeigen, so dass nicht jede Magnetfeldänderung zum Anlass genommen wird, das Abstellen eines Fahrzeugs anzunehmen.

In vorteilhafter Weiterbildung der Erfindung wird das Erdmagnetfeld über dem Stellplatz mittels zumindest zweier Magnetfeldsensoren erfasst, die einerseits im Bereich des vorderen Endes des Stellplatzes und andererseits im Bereich des hinteren Endes des Stellplatzes angeordnet sind. In Weiterbildung der Erfindung wird hierbei für die Bestimmung des Abstellens eines Fahrzeugs die zeitliche Korrelation der an den beiden Erdmagnetfeldsensoren auftretenden Signalcharakteristika herangezogen. Insbesondere kann die zeitliche Korrelation von Signalflanken genutzt werden, um das Abstellen eines Fahrzeugs auf dem Stellplatz zu bestimmen.

In vorteilhafter Weiterbildung der Erfindung bestimmt die mit den beiden Erdmagnetfeldsensoren verbundene Auswerteeinheit das Abstellen eines Fahrzeugs auf dem Stellplatz dann, wenn das Signal des einen Magnetfeldsensors eine steigende und eine fallende Flanke zeigt und das Signal des zweiten Magnetfeldsensors nur eine ansteigende Flanke zeigt, die innerhalb eines vorbestimmten Zeitfensters relativ zu den beiden Flanken oder zumindest zu einer der Flanken des Signals des zuvor genannten ersten Magnetfeldsensors auftritt. Diesem Verfahrensschritt liegt die Überlegung zu Grunde, dass beispielsweise bei Einfahren eines Fahrzeugs in den Stellplatz von dessen hinteren Ende her zunächst der am hinteren Ende des Stellplatzes positionierte Magnetfeldsensor eine entsprechende Veränderung des Erdmagnetfelds zunächst mit einer ansteigenden Flanke und nach vollständigem Überfahren des Magnetfeldsensors mit einer abfallenden Signalflanke anzeigt. Hierzu zeitversetzt zeigt der am vorderen Ende des Stellplatzes positionierte Magnetfeldsensor mit einer ansteigenden Signalflanke die entsprechende Änderung des Erdmagnetfelds an, wenn sich die Front des Fahrzeugs diesem am vorderen Ende des Stellplatzes positionierten Magnetfeldsensor nähert. Fährt indes das Fahrzeug am vorderen Ende über den Stellplatz hinaus, um beispielsweise auf einem dahinterliegenden Stellplatz zu parkieren, zeigt auch das Signal des Magnetfeldsensors am vorderen Stellplatzende ein abfallende Flanke, aus der die Auswerteeinheit sodann schließt, dass das Fahrzeug nicht auf dem jeweiligen Stellplatz geparkt wurde.

In Weiterbildung der Erfindung erfassen die Magnetfeldsensoren hierbei zumindest die vertikale Komponente des Erdmagnetfelds bzw. deren Veränderung, wobei vorteilhafterweise vorgesehen ist, dass die Magnetfeldsensoren sowohl die vertikale Komponente als auch die horizontale Komponente des Erdmagnetfelds bzw. deren Veränderungen erfassen. Die Magnetfeldsensoren umfassen hierzu vorteilhafter Weise Erfassungsmittel zur Erfassung der vertikalen Erdmagnetfeldkomponente und Erfassungsmittel zur Erfassung der horizontalen Erdmagnetfeldkomponente, wobei vorteilhafter Weise vorgesehen ist, dass die entsprechenden Magnetfeldkomponenten separat erfasst und entsprechend durch separate Signale individuell wiedergegeben werden. Die Auswerteeinheit bestimmt hierbei vorteilhafter Weise sowohl aus der vertikalen Komponente des Erdmagnetfelds als auch der horizontalen Komponente hiervon in der zuvor genannten Weise den fahrzeugspezifischen Fingerabdruck auf das Erdmagnetfeld, um die Diebstahlsicherung bzw. Überwachung des geparkten Fahrzeugs auszuführen.

Um eine manipulationssichere und auch vor äußeren Einflüssen wie Schlägen und Stößen gesicherte Installation der Magnetfeldsensoren zu erreichen, ist in vorteilhafter Weiterbildung der Erfindung vorgesehen, dass diese Magnetfeldsensoren unter der Bodenoberfläche des Stellplatzes eingebaut sind. Hierbei können die Magnetfeldsensoren vorteilhafterweise in aufrechten Bohrlöchern versenkt sein und/oder in zur Bodenoberfläche im Wesentlichen parallel verlaufenden Kabelschächten angeordnet sein. Die erstgenannte Variante mit aufrechten Bohrlöchern ist besonders für bestehende Park- oder Rastplätze geeignet, da diese Variante ohne aufwendige Tiefbauarbeiten realisiert werden kann. Die Anschlussleitungen der Magnetfeldsensoren können in einem einfachen Frässchnitt platziert werden. Alternativ oder zusätzlich können die Magnetfeldsensoren auch berührungslos mit der Auswerteeinheit kommunizieren.

Die Erfindung wird nachfolgend anhand eines bevorzugten Ausführungsbeispiels und zugehöriger Zeichnungen näher erläutert. In den Zeichnungen zeigen:
- Figur 1:: eine Draufsicht auf eine an einem Rastplatz installierte Vorrichtung zur Überwachung von geparkten Fahrzeugen nach einer vorteilhaften Ausführung der Erfindung, gemäß der unter der Bodenoberfläche eines jeden Stellplatzes zwei Magnetfeldsensoren zur Überwachung des Erdmagnetfelds über dem Stellplatz vorgesehen sind,
- Figur 2:: eine Schnittansicht durch die Stellplätze des Parkplatzes aus Figur 1, die die Verlegung der Magnetfeldsensoren unter der Bodenoberfläche zeigt,
- Figur 3:: eine Schnittansicht durch die Stellplätze aus Figur 1, die die Verlegung der Magnetfeldsensoren unter der Bodenoberfläche der Stellplätze nach einer alternativen Ausführung der Erfindung in einem Kanalschacht zeigt, und
- Figur 4:: ein Diagramm des zeitlichen Verlaufs der Signale der Magnetfeldsensoren beim Abstellen eines Fahrzeugs.

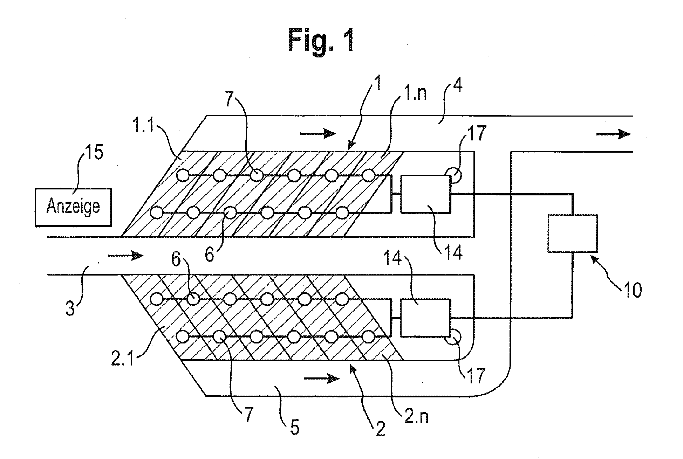

Wie die Figur 1 zeigt, umfasst das Parkplatzüberwachungssystem der vorliegenden Erfindung in der gezeichneten Ausführung zwei Parkplatzfelder 1 und 2, die jeweils eine Vielzahl von nebeneinander angeordneten Stellplätzen 1.1 bis 1.n bzw. 2.1 bis 2.n umfassen. Von einer zentralen Zufahrt 3 sind alle der genannten Stellplätze der rechts und links von der genannten Zufahrt 3 angeordneten Parkplatzfelder 1 und 2 anfahrbar. Über zwei Abfahrten 4 bzw. 5, die auf der der Zufahrt 3 jeweils gegenüberliegenden Seite der Stellplätze angeordnet sind und sich im Wesentlichen parallel zur Zufahrt 3 erstrecken, sind die Stellplätze 1.1 bis 1.n bzw. 2.1 bis 2.n wieder zu verlassen.

Wie Figur 1 zeigt, sind unter der Bodenoberfläche eines jeden Stellplatzes 1.1 bis 1.n bzw. 2.1 bis 2.n jeweils zwei Magnetfeldsensoren 6 und 7 vorzugsweise in Form von Fluxgate-Sensoren angeordnet, die die Belegung eines jeweiligen Stellplatzes überwachen und ein darauf abgestelltes Fahrzeug 16 gegen Diebstahl bzw. Aufbruch sichern.

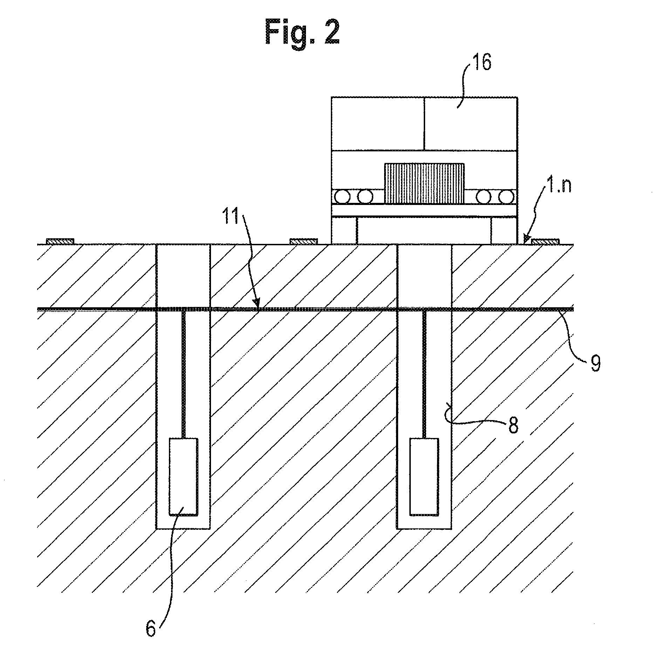

Wie Figur 2 zeigt, können die Magnetfeldsensoren 6 und 7 in im Wesentlichen vertikalen Sacklochausnehmungen bzw. Bohrlöchern 8 (z.B. mit einem Durchmesser von 25 mm) im Boden versenkt sein, wobei die Magnetfeldsensoren 6 bzw. 7 in der gezeichneten Ausführung ca. 0,25 m bis 1,5 m, vorzugsweise etwa 0,5-0,7 m unter der Bodenoberfläche platziert sind. Die über die Parkplatzfelder 1 und 2 verteilten Magnetfeldsensoren 6 und 7 sind hierbei jeweils über eine Anschlussleitung 9 an eine Auswerteeinheit 10 angebunden, in der die Signale der Magnetfeldsensoren 6 und 7 ausgewertet werden. Wie Figur 1 zeigt, kann die genannte Anschlussleitung 9 in einem Frässchnitt 11 (z.B. mit einer Tiefe > 10 cm) bzw. einer schmalen Nut untergebracht werden, die geringfügig unter der Bodenoberfläche beispielsweise durch Auffräsen der Fahrbahndecke eingebracht werden kann. Die in Figur 2 gezeichnete Ausführung ist besonders für schon bestehende Rastplätze geeignet, da keine aufwendigen Tiefbauarbeiten realisiert werden müssen, sondern lediglich Bohrlöcher 8 sowie ein Frässchnitt 11 in die Fahrbahndecke bzw. den Boden eingebracht werden müssen.

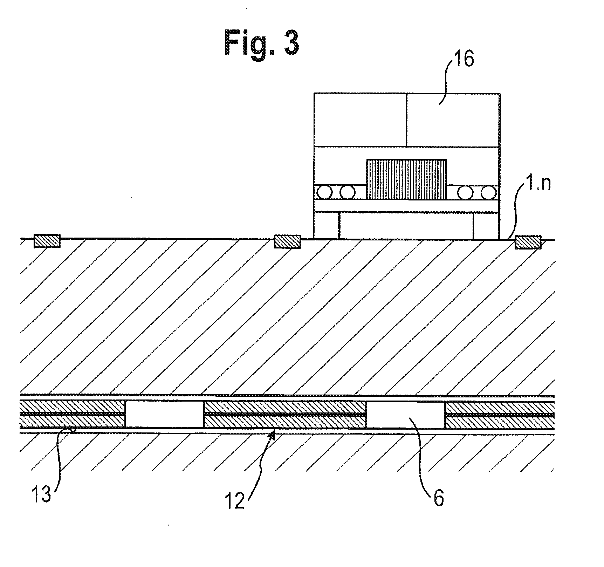

Alternativ zu der in Figur 2 gezeichneten Ausführung ist in Figur 3 eine Installation der Magnetfeldsensoren 6 und 7 in Form eines Sensorstrangs 12 gezeigt, der in einem im Wesentlichen horizontalen Bodenschacht beispielsweise in Form eines Leerrohrs 13 aufgenommen ist. Auch bei dieser Ausführung sind die Magnetfeldsensoren 6 und 7 vorteilhafterweise in dem zuvor genannten Tiefenbereich, insbesondere etwa im Bereich von 0,5-0,7 m unter der Bodenoberfläche platziert.

Wie Figur 1 zeigt, sind hierbei jedem Stellplatz 1.1 bis 1.n bzw. 2.1 bis 2.n jeweils zwei Magnetfeldsensoren 6 und 7 zugeordnet, von denen einer zu dem einfahrtseitigen Endbereich des jeweiligen Stellplatzes hin angeordnet und der andere zu dem jeweils ausfahrtseitigen Ende des Stellplatzes hin positioniert ist, so dass die beiden einem Stellplatz zugeordneten Magnetfeldsensoren 6 und 7 in Einfahrrichtung voneinander beabstandet sind. Jeder Stellplatz wird mittels separater Magnetfeldsensoren separat überwacht.

In der gezeichneten Ausführung sind die Magnetfeldsensoren 6 und 7 hierbei über die Anschlussleitungen 9 zunächst für jedes Parkplatzfeld 1 bzw. 2 separat mit einem Einzelplatzkonzentrator 14 verbunden, die wiederum mit der zentralen für beide Parkplatzfelder 1 und 2 zuständigen Auswerteeinheit 10 verbunden sind. Die genannten Einzelplatzkonzentratoren können vorteilhafterweise Datenverarbeitungsmittel umfassen, die beispielsweise die Ausgabe eines Parktickets steuern und die jeweiligen Magnetfeldsensoren 6 und 7 bzw. die hiervon ausgeführte Überwachung ein- und ausschalten.

Ein Parkvorgang an dem gezeichneten System kann hierbei wie folgt bewerkstelligt werden:
Ein über die Zufahrt 3 einfahrendes Fahrzeug passiert zunächst eine vor den Parkplatzfeldern 1 und 2 platzierte Anzeige 15, die von der zentralen Auswerteeinheit 10 angesteuert wird und die freien Stellplätze anzeigt, auf denen die Magnetfeldsensoren 6 und 7 kein Fahrzeug erfasst haben.

Das jeweilige Fahrzeug fährt dann auf einen der als frei angezeigten Stellplätze, beispielsweise den Stellplatz 1.n ein und stellt sein Fahrzeug auf diesem Stellplatz ab.

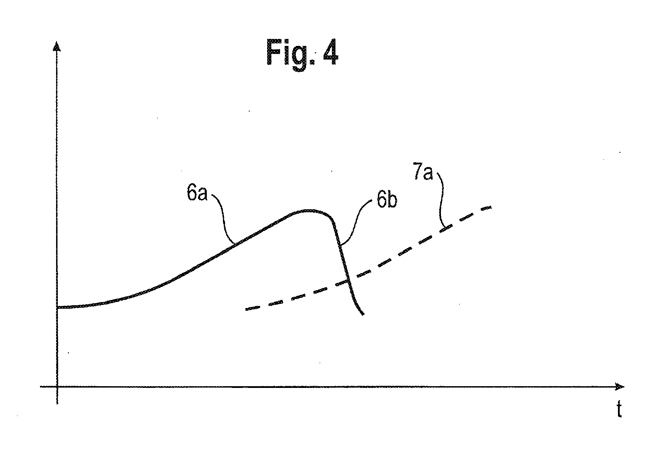

Dieses Beparken des Stellplatzes 1.n erfassen die unter diesem Stellplatz angeordneten Magnetfeldsensoren 6 und 7. Wie Figur 4 zeigt, zeigt zunächst der einfahrtseitig angeordnete Magnetfeldsensor 6 eine charakteristische Signaländerung mit einer zunächst ansteigenden Flanke 6a, die nach Erreichen eines Peaks in eine abfallende Flanke 6b übergeht, die dem Überfahren des genannten Magnetfeldsensors 6 entspricht. Zeitversetzt hierzu zeigt der ausfahrtseitig positionierte Magnetfeldsensor 7 in seinem Signal ebenfalls eine entsprechende Änderung, die eine ansteigende Flanke 7a besitzt. Da dieser Magnetsensor 7 jedoch nicht soweit überfahren wird wie der einfahrtseitige Magnetfeldsensor 6, fehlt es an dem abfallenden Ast der Signaländerung.

Die Auswerteeinheit 10 wertet die in Figur 4 gezeigten Signaländerungen der Magnetfeldsensoren 6 und 7 aus, insbesondere daraufhin, ob sie dem typischen Verlaufsmuster wie in Figur 4 gezeigt entsprechen, das bei einem Einfahren und Parken des Fahrzeugs entsteht.

Liegt ein solches Signalverlaufsmuster vor, wird die Überwachung des Stellplatzes 1.n und des darauf abgestellten Fahrzeugs initiiert. Alternativ oder zusätzlich kann dieses Scharfstellen der Diebstahlsicherung und Überwachung auch davon abhängig gemacht werden, ob ein Parkticket für den jeweiligen Stellplatz gelöst wird, was beispielsweise an dem Einzelplatzkonzentrator 14 abgefragt werden kann.

Hierzu wird zunächst über die Magnetfeldsensoren 6 und 7 das über dem Stellplatz 1.n herrschende Erdmagnetfeld abgefragt bzw. gemessen, und zwar sowohl dessen vertikale Komponente als auch dessen horizontale Komponente. Die entsprechend erfassten Magnetfelddaten werden in der Auswerteeinheit bzw. einem daran angeschlossenen Speicherbaustein als fahrzeugspezifische Magnetfeld-Referenzdaten abgespeichert.

Daraufhin wird kontinuierlich oder zyklisch in vorgegebenen Intervallen mittels der Magnetfeldsensoren 6 und 7 das über dem Stellplatz 1.n herrschende Erdmagnetfeld erneut erfasst, und zwar vorteilhafter Weise wiederum sowohl dessen vertikale Komponente als auch dessen horizontale Komponente. Die erneut erfassten Magnetfelddaten werden sodann in der Auswerteeinheit 10 mit den zuvor abgespeicherten fahrzeugspezifischen Magnetfeld-Referenzdaten verglichen. Werden hierbei vorbestimmte, insbesondere ausreichend große Veränderungen des Erdmagnetfelds festgestellt, wird von der Auswerteeinheit 10 angenommen, dass dies auf eine Änderung am geparkten Fahrzeug zurückgeht, beispielsweise ein Öffnen der Laderaumklappe oder dergleichen, und gibt ein entsprechendes Warnsignal aus.

Um einen falschen Alarm dann zu vermeiden, wenn der Fahrzeugbesitzer selbst sein Fahrzeug wieder öffnet oder bewegt oder entfernt, kann die Alarmfunktion vorzugsweise an dem zuvor genannten Einzelplatzkonzentrator bzw. der diesem zugeordneten Parkticketstation deaktiviert werden, beispielsweise dadurch, dass das Parkticket bezahlt wird.

### Bezugszeichenliste

- 1: Parkplatzfeld
- 1.1: Stellplatz
- 1.n: Stellplatz
- 2: Parkplatzfeld
- 2.1: Stellplatz
- 2.n: Stellplatz
- 3: Zufahrt
- 4: Abfahrt
- 5: Abfahrt
- 6: Magnetfeldsensor
- 6a: ansteigende Flanke
- 6b: abfallende Flanke
- 7: Magnetfeldsensor
- 7a: ansteigende Flanke
- 8: Bohrloch
- 9: Anschlussleitung
- 10: Auswerteeinheit
- 11: Frässchnitt
- 12: Sensorstrang
- 13: Leerrohr
- 14: Einzelplatzkonzentrator
- 15: Anzeige
- 16: Fahrzeug

## Patentansprüche

1. Verfahren zur Diebstahlsicherung und/oder Überwachung eines geparkten Fahrzeugs (16), bei dem der durch das Fahrzeug (16) beparkte Stellplatz (1.1 bis 1.n; 2.1 bis 2.n) mittels zumindest eines Sensors überwacht, das Sensorsignal mittels einer Auswerteeinheit (10) auf eine Veränderung hin ausgewertet und bei Vorliegen einer vorbestimmten Signaländerung ein Warnsignal abgegeben wird, **dadurch gekennzeichnet, dass** nach Abstellen eines Fahrzeugs (16) auf einem jeweiligen Stellplatz (1.1 bis 1.n; 2.1 bis 2.n) das Erdmagnetfeld über dem Stellplatz (1.1 bis 1.n; 2.1 bis 2.n) mittels zumindest eines Magnetfeldsensors (6, 7) erfasst und in Form von fahrzeugspezifischen Magnetfeld-Referenzdaten abgespeichert wird, wobei nach Abspeichern der fahrzeugspezifischen Magnetfeld-Referenzdaten kontinuierlich oder zyklisch das Erdmagnetfeld über dem Stellplatz (1.1 bis 1.n; 2.1 bis 2.n) erneut erfasst und mit den gespeicherten fahrzeugspezifischen Magnetfeld-Referenzdaten verglichen wird, wobei bei Vorliegen einer vorbestimmten Änderung der aktuell erfassten Magnetfelddaten von den abgespeicherten, fahrzeugspezifischen Magnetfeld-Referenzdaten das Warnsignal ausgegeben wird.

2. Verfahren nach dem vorhergehenden Anspruch, wobei das Abstellen des Fahrzeugs (16) auf dem Stellplatz (1.1 bis 1.n; 2.1 bis 2.n) anhand des Signals des zumindest einen Magnetfeldsensors (6, 7) bestimmt wird, wobei zunächst das Erdmagnetfeld über dem Stellplatz (1.1 bis 1.n; 2.1 bis 2.n) ohne darauf abgestelltem Fahrzeug erfasst und in Form von ursprünglichen Magnetfeld-Referenzdaten abgespeichert wird, und sodann das Erdmagnetfeld über dem Stellplatz (1.1 bis 1.n; 2.1 bis 2.n) laufend oder zyklisch erfasst und mit den gespeicherten ursprünglichen Magnetfeld-Referenzdaten verglichen wird, wobei bei einer vorbestimmten Änderung der aktuellen Magnetfelddaten gegenüber den gespeicherten ursprünglichen Magnetfeld-Referenzdaten das Abstellen des Fahrzeugs (16) festgestellt wird.

3. Verfahren nach einem der vorhergehenden Ansprüche, wobei das Abstellen des Fahrzeugs (16) in Abhängigkeit eines Signals eines dem Stellplatz (1.1 bis 1.n; 2.1 bis 2.n) zugeordneten Parkticketautomaten (17) festgestellt wird.

4. Verfahren nach einem der vorhergehenden Ansprüche, wobei das Abstellen des Fahrzeugs (16) auf dem Stellplatz (1.1 bis 1.n; 2.1 bis 2.n) mittels eines Abtastsensors und/oder eines Abstandsensors, der auf den jeweiligen Stellplatz gerichtet ist, bestimmt wird.

5. Verfahren nach einem der vorhergehenden Ansprüche, wobei das Erdmagnetfeld über dem Stellplatz (1.1 bis 1.n; 2.1 bis 2.n) mittels zweier Magnetfeldsensoren (6, 7), die im Bereich der vorderen und hinteren Enden des jeweiligen Stellplatzes (1.1 bis 1.n; 2.1 bis 2.n) angeordnet sind, erfasst wird.

6. Verfahren nach dem vorhergehenden Anspruch, wobei zur Bestimmung des Abstellens eines Fahrzeugs (16) die zeitliche Korrelation der Signale der beiden Magnetfeldsensoren (6, 7), insbesondere die zeitliche Korrelation der ansteigenden und abfallenden Flanken der Signale der beiden Magnetfeldsensoren (6, 7) bestimmt wird.

7. Verfahren nach dem vorhergehenden Anspruch, wobei das Abstellen eines Fahrzeugs (16) auf dem Stellplatz (1.1 bis 1.n; 2.1 bis 2.n) dann angenommen wird, wenn das Signal des einen Magnetfeldsensors (6) eine steigende und eine fallende Flanke (6a, 6b) und das Signal des zweiten Magnetfeldsensors (7) nur eine steigende Flanke (7a) zeigt, die innerhalb eines vorbestimmten Zeitfensters relativ zu den Flanken (6a, 6b) des Signals des genannten einen Magnetfeldsensors (6) festgestellt wird.

8. Verfahren nach einem der vorhergehenden Ansprüche, wobei mit dem zumindest einem Magnetfeldsensor (6, 7) die vertikale Komponente des Erdmagnetfelds erfasst, vorzugsweise sowohl die vertikale Komponente als auch die horizontale Komponente des Erdmagnetfelds über dem jeweiligen Stellplatz erfasst werden und das Warnsignal bei Vorliegen einer vorbestimmten Abweichung der vertikalen Komponente des aktuell erfassten Erdmagnetfelds, vorzugsweise einer vorbestimmten Abweichung sowohl der vertikalen Komponente als auch der horizontalen Komponente von den entsprechenden gespeicherten, fahrzeugspezifischen Magnetfeld-Referenzdaten abgegeben wird.

9. Vorrichtung zur Diebstahlsicherung und/oder Überwachung eines geparkten Fahrzeugs (16) nach dem Verfahren nach Anspruch 1, mit zumindest zwei unter einem jeweiligen Stellplatz (1.1 bis 1.n; 2.1 bis 2.n) positionierten Magnetfeldsensoren (6, 7) zur Erfassung des Erdmagnetfelds über dem Stellplatz (1.1 bis 1.n; 2.1 bis 2.n), einem Magnetfelddatenspeicher zur Speicherung fahrzeugspezifischer Magnetfeld-Referenzdaten nach Abstellen eines Fahrzeug auf dem jeweiligen Stellplatz, sowie einer Auswerteeinheit (10) ausgebildet zur Auswertung aktuell erfasster, das Erdmagnetfeld über dem Stellplatz angebender Magnetfelddaten im Vergleich zu den gespeicherten fahrzeugspezifischen Magnetfeld-Referenzdaten und zum Ausgeben eines Warnsignals bei Vorliegen einer vorbestimmten Abweichung der aktuell erfassten Magnetfelddaten gegenüber den gespeicherten fahrzeugspezifischen Magnetfeld-Referenzdaten.

10. Vorrichtung nach dem vorhergehenden Anspruch, wobei die Magnetfeldsensoren (6, 7) jeweils unter der Bodenoberfläche des Stellplatzes, auf dem das zu überwachende Fahrzeug abstellbar ist, angeordnet sind.

11. Vorrichtung nach einem der beiden vorhergehenden Ansprüche, wobei die Magnetfeldsensoren (6, 7) jeweils Erfassungsmittel zur Erfassung der vertikalen Komponente des Erdmagnetfelds und Erfassungsmittel zur Erfassung der horizontalen Komponente des Erdmagnetfelds aufweisen, wobei die Magnetfeldsensoren (6, 7) vorzugsweise in Form von Fluxgate-Sensoren ausgebildet sind.

## Claims

1. Method for the antitheft protection and/or monitoring of a parked vehicle (16), in which the parking space (1.1 to 1.n; 2.1 to 2.n) occupied by the vehicle (16) is monitored by means of at least one sensor, the sensor signal is evaluated in respect of a change by means of an evaluation unit (10), and a warning signal is output in the event of a predetermined signal change, **characterised in that** after a vehicle (16) has been parked in a respective parking space (1.1 to 1.n; 2.1 to 2.n) the terrestrial magnetic field over the parking space (1.1 to 1.n; 2.1 to 2.n) is measured by means of at least one magnetic field sensor (6, 7) and stored in the form of vehicle-specific magnetic field reference data, wherein after storage of the vehicle-specific magnetic field reference data, the terrestrial magnetic field over the parking space (1.1 to 1.n; 2.1 to 2.n) is remeasured continuously or cyclically and compared with the stored vehicle-specific magnetic field reference data, and wherein the warning signal is output in the event of a predetermined change in the currently measured magnetic field data from the stored vehicle-specific magnetic field reference data.

2. Method according to the preceding claim, wherein parking of the vehicle (16) in the parking space (1.1 to 1.n; 2.1 to 2.n) is determined with the aid of the signal of the at least one magnetic field sensor (6, 7), wherein the terrestrial magnetic field over the parking space (1.1 to 1.n; 2.1 to 2.n) is initially measured without the vehicle parked there and stored in the form of original magnetic field reference data, and the terrestrial magnetic field over the parking space (1.1 to 1.n; 2.1 to 2.n) is then measured constantly or cyclically and compared with the stored original magnetic field reference data, parking of the vehicle (16) being established in the event of a predetermined change in the current magnetic field data relative to the stored original magnetic field reference data.

3. Method according to any one of the preceding claims, wherein parking of the vehicle (16) is established as a function of a parking ticket machine (17) assigned to the parking space (1.1 to 1.n; 2.1 to 2.n).

4. Method according to any one of the preceding claims, wherein parking of the vehicle (16) in the parking space (1.1 to 1.n; 2.1 to 2.n) is determined by means of a scanning sensor and/or a distance sensor, which is directed at the respective parking space.

5. Method according to any one of the preceding claims, wherein the terrestrial magnetic field over the parking space (1.1 to 1.n; 2.1 to 2.n) is measured by means of two magnetic field sensors (6, 7), which are arranged in the region of the front and rear ends of the respective parking space (1.1 to 1.n; 2.1 to 2.n).

6. Method according to the preceding claim, wherein the temporal correlation of the signals of the two magnetic field sensors (6, 7), in particular the temporal correlation of the leading and trailing edges of the signals of the two magnetic field sensors (6, 7), is determined in order to determine the parking of a vehicle (16).

7. Method according to the preceding claim, wherein the parking of a vehicle (16) in the parking space (1.1 to 1.n; 2.1 to 2.n) is assumed when the signal of one magnetic field sensor (6) shows a leading and trailing edge (6a, 6b) and the signal of the second magnetic field sensor (7) only shows a leading edge (7a), which is established within a predetermined time window relative to the edges (6a, 6b) of the signal of the said one magnetic field sensor (6).

8. Method according to any one of the preceding claims, wherein the vertical component of the terrestrial magnetic field is measured with the at least one magnetic field sensor (6, 7), and preferably both the vertical component and the horizontal component of the terrestrial magnetic field over the respective parking space are measured, and the warning signal is output in the event of a predetermined deviation of the vertical component of the currently measured terrestrial magnetic field, preferably a predetermined deviation of both the vertical component and the horizontal component, from the corresponding stored vehicle-specific magnetic field reference data.

9. Device for the antitheft protection and/or monitoring of a parked vehicle (16) by the method according to Claim 1, having at least two magnetic field sensors (6, 7) positioned under a respective parking space (1.1 to 1.n; 2.1 to 2.n) in order to measure the terrestrial magnetic field over the parking space (1.1 to 1.n; 2.1 to 2.n), a magnetic field data memory for storing vehicle-specific magnetic field reference data after a vehicle has been parked in the respective parking space, and an evaluation unit (10) configured in order to evaluate currently measured magnetic field data representing the terrestrial magnetic field over the parking space in relation to the stored vehicle-specific magnetic field reference data, and to output a warning signal in the event of a predetermined deviation of the currently measured magnetic field data relative to the stored vehicle-specific magnetic field reference data.

10. Device according to the preceding claim, wherein the magnetic field sensors (6, 7) are respectively arranged under the floor surface of the parking space in which the vehicle to be monitored can be parked.

11. Device according to any one of the two preceding claims, wherein the magnetic field sensors (6, 7) respectively comprise measuring means for measuring the vertical component of the terrestrial magnetic field and measuring means for measuring the horizontal component of the terrestrial magnetic field, and wherein the magnetic field sensors (6, 7) are preferably configured in the form of fluxgate sensors.

## Revendications

1. Procédé pour la protection contre le vol et/ou la surveillance d'un véhicule (16) stationné, dans lequel la place de stationnement (1.1 à 1.n ; 2.1 à 2.n) occupée par le véhicule (16) est surveillée au moyen d'au moins un capteur, le signal du capteur est analysé au moyen d'une unité d'analyse (10) pour repérer une éventuelle modification, et en présence d'une modification prédéterminée du signal, un signal d'alerte est émis, **caractérisé en ce qu'**après l'arrêt d'un véhicule (16) sur une place de stationnement (1.1 à 1.n ; 2.1 à 2.n) respective, le champ magnétique terrestre au niveau de la place de stationnement (1.1 à 1.n ; 2.1 à 2.n) est détecté au moyen d'au moins un capteur de champ magnétique (6, 7) et enregistré sous la forme de données de référence de champ magnétique spécifiques au véhicule, étant entendu qu'après l'enregistrement des données de référence du champ magnétique spécifiques au véhicule, le champ magnétique terrestre au niveau de la place de stationnement (1.1 à 1.n; 2.1 à 2.n) est à nouveau détecté et comparé avec les données de référence du champ magnétique spécifiques au véhicule, de façon continue ou cyclique, étant entendu qu'en présence d'une modification prédéterminée des données du champ magnétique détectées à tout moment par rapport aux données de référence du champ magnétique spécifiques au véhicule, le signal d'alerte est émis.

2. Procédé selon la revendication précédente, dans lequel l'arrêt du véhicule (16) sur la place de stationnement (1.1 à 1.n ; 2.1 à 2.n) est déterminé sur la base du signal de l'au moins un capteur de champ magnétique (6, 7), étant entendu que le champ magnétique terrestre au niveau de la place de stationnement (1.1 à 1.n ; 2.1 à 2.n) est d'abord détecté et enregistré sous la forme de données de référence du champ magnétique initiales sans véhicule arrêté et le champ magnétique terrestre au niveau de la place de stationnement (1.1 à 1.n ; 2.1 à 2.n) est ensuite détecté et comparé avec les données de référence du champ magnétique initiales de façon continue ou cyclique, étant entendu qu'en présence d'une modification prédéterminée des données actuelles du champ magnétique par rapport aux données de référence du champ magnétique initiales enregistrées, l'arrêt du véhicule (16) est constaté.

3. Procédé selon l'une des revendications précédentes, dans lequel l'arrêt du véhicule (16) est constaté en fonction d'un signal d'un distributeur automatique de ticket de stationnement (17) correspondant à la place de stationnement (1.1 à 1.n ; 2.1 à 2.n).

4. Procédé selon l'une des revendications précédentes, dans lequel l'arrêt du véhicule (16) sur la place de stationnement (1.1 à 1.n ; 2.1 à 2.n) est déterminé au moyen d'un capteur à balayage et/ou d'un capteur de distance qui est dirigé vers la place de stationnement concernée.

5. Procédé selon l'une des revendications précédentes, dans lequel le champ magnétique terrestre au niveau de la place de stationnement (1.1 à 1.n ; 2.1 à 2.n) est détecté au moyen de deux capteurs de champ magnétique (6, 7) qui sont agencés dans la zone de l'extrémité avant et de l'extrémité arrière de la place de stationnement (1.1 à 1.n ; 2.1 à 2.n) concernée.

6. Procédé selon la revendication précédente, dans lequel pour déterminer l'arrêt d'un véhicule (16), la corrélation dans le temps des signaux des deux capteurs de champ magnétique (6, 7), en particulier la corrélation dans le temps des fronts montants et descendants des signaux des deux capteurs de champ magnétique (6, 7), est déterminée.

7. Procédé selon la revendication précédente, dans lequel il est admis qu'un véhicule (16) s'est arrêté sur la place de stationnement (1.1 à 1.n ; 2.1 à 2.n) lorsque le signal du premier capteur de champ magnétique (6) présente un front montant et un front descendant (6a, 6b) et que le signal du deuxième capteur de champ magnétique (7) présente seulement un front montant (7a) qui est observé à l'intérieur d'une fenêtre de temps prédéterminée par rapport aux fronts (6a, 6b) du signal dudit premier capteur de champ magnétique (6).

8. Procédé selon l'une des revendications précédentes, dans lequel avec l'au moins un capteur de champ magnétique (6, 7), les composants verticaux du champ magnétique terrestre, et de préférence aussi bien les composants verticaux que les composants horizontaux du champ magnétique terrestre au niveau de la place de stationnement concernée sont détectés et le signal d'alerte est émis en présence d'une déviation prédéterminée des composants verticaux du champ magnétique terrestre actuel détecté, et de préférence d'une déviation prédéterminée aussi bien des composants verticaux que des composants horizontaux des données de référence du champ magnétique spécifiques sur le véhicule enregistrées correspondantes.

9. Dispositif pour la protection contre le vol et/ou la surveillance d'un véhicule (16) stationné selon le procédé de la revendication 1, comprenant au moins deux capteurs de champ magnétique (6, 7) positionnés en dessous d'une place de stationnement (1.1 à 1.n ; 2.1 à 2.n) respective destinés à détecter le champ magnétique terrestre au niveau de la place de stationnement (1.1 à 1.n ; 2.1 à 2.n), un enregistreur de données de champ magnétique destiné à enregistrer des données de référence de champ magnétique spécifiques au véhicule après l'arrêt d'un véhicule sur la place de stationnement concernée, ainsi qu'une unité d'analyse (10) conçue pour analyser les données du champ magnétique détectées à tout moment, qui indiquent le champ magnétique terrestre au niveau de la place de stationnement, par rapport aux données de référence du champ magnétique spécifiques au véhicule enregistrées et pour émettre un signal d'alerte en présence d'une déviation prédéterminée des données de champ magnétique détectées à un moment par rapport aux données de référence du champ magnétique spécifiques au véhicule enregistrées.

10. Dispositif selon la revendication précédente, dans lequel les capteurs de champ magnétique (6, 7) sont respectivement agencés en dessous de la surface du sol de la place de stationnement sur laquelle le véhicule à surveiller peut être arrêté.

11. Dispositif selon l'une des deux revendications précédentes, dans lequel les capteurs de champ magnétique (6, 7) présentent respectivement des moyens de détection destinés à détecter les composants verticaux du champ magnétique terrestre et des moyens de détection destinés à détecter les composants horizontaux du champ magnétique terrestre, étant entendu que les capteurs de champ magnétique (6, 7) sont de préférence réalisés sous la forme de capteurs à vanne de flux.
